# EUROPÄISCHE PATENTSCHRIFT

(11) **EP 1 678 890 B1**
(45) Veröffentlichungstag und Bekanntmachung des Hinweises auf die Patenterteilung: **18.04.2007**
(21) Anmeldenummer: 04791260.5
(22) Anmeldetag: 20.10.2004
(51) Int. Cl.: H04L 12/56

(54) **VERFAHREN UND EINRICHTUNG ZUR BESTIMMUNG VON PFADEN UND ZUWEISUNG VON FUNKRESSOURCEN FÜR DIE BESTIMMTEN PFADE IN EINEM FUNKKOMMUNIKATIONSSYSTEM**
METHOD AND DEVICE FOR DETERMINING ROUTINGS AND FOR ALLOCATING RADIO RESOURCES FOR THE DETERMINED ROUTINGS IN A RADIO COMMUNICATIONS SYSTEM
PROCEDE ET DISPOSITIF POUR DETERMINER DES CHEMINS ET ATTRIBUER DES RESSOURCES RADIO AUX CHEMINS DETERMINES DANS UN SYSTEME DE COMMUNICATION RADIO

(30) Priorität: 31.10.2003 DE 10350895
(43) Veröffentlichungstag der Anmeldung: 12.07.2006
(73) Patentinhaber: SIEMENS AKTIENGESELLSCHAFT, 80333 München (DE)
(72) Erfinder: GAO, Yan, 81737 München (DE); LI, Hui, 80937 München (DE); YU, Dan, Haidian District, 100085 Beijing (CN); ZHANG, Qikai, 22761 Hamburg (DE)
(86) Internationale Anmeldenummer: PCT/EP2004/052588
(87) Internationale Veröffentlichungsnummer: WO 2005/043835

(56) Entgegenhaltungen:
- EP-A- 0 921 668
- WO-A-01/28170
- WO-A-99/11081
- WO-A-02/069577
- US-A- 5 412 654
- US-B1- 6 580 704

## Beschreibung

Die Erfindung betrifft ein Verfahren zur Kommunikation per Funk zwischen einer Einrichtung und Funkstationen eines Funkkommunikationssystems. Weiterhin betrifft die Erfindung eine Einrichtung zur Kommunikation per Funk mit Funkstationen eines Funkkommunikationssystems.

In Funkkommunikationssystemen werden Informationen (beispielsweise Sprache, Bildinformation, Videoinformation, SMS (Short Message Service), MMS (Multimedia Messaging Service) oder andere Daten) mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige teilnehmerseitige Funkstationen, Funkzugangspunkte oder Basisstationen handeln. Das Abstrahlen der elektromagnetischen Wellen erfolgt dabei mit Trägerfrequenzen, die in dem für das jeweilige System vorgesehenen Frequenzband liegen.

Funkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Für das zellulare GSM-Mobilfunksystem werden Frequenzen bei 900, 1800 und 1900 MHz genutzt.

Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM.

In der Regel wird für WLANs der nicht lizenzierte Frequenzbereich um 2,4 GHz genutzt. Datenübertragungsraten liegen bei bis zu 11 Mbit/s. Künftige WLANs können im 5 GHz Bereich betrieben werden und Datenraten von über 50 Mbit/s erreichen. Somit stehen den Teilnehmern der WLANs Datenraten zur Verfügung, die erheblich höher liegen als diejenigen, die von der dritten Mobilfunkgeneration (wie z.B. UMTS) angeboten werden. Damit ist für die Übertragung von großen Datenmengen, insbesondere in Verbindung mit Internetzugriffen, der Zugriff auf WLANs für hochbitratige Verbindungen vorteilhaft.

Über die WLAN Funkzugangspunkte kann eine Anbindung an andere Kommunikationssysteme, so z.B. an Breitband-Datennetze (BDN Broadband Data Networks) erfolgen. Hierzu kommunizieren die Funkstationen des WLAN entweder direkt mit einem Funkzugangspunkt oder bei weiter entfernten Funkstationen über andere Funkstationen, welche die Informationen zwischen der Funkstation und dem Funkzugangspunkt über einen Pfad zwischen der Funkstation und dem Funkzugangspunkt weiterleiten.

In einem Adhoc-Modus eines Funkkommunikationssystems können Funkstationen über einen oder mehrere Sprünge (Hop bzw. Multihop) miteinander kommunizieren, ohne dass vermittelnde Einrichtungen wie z.B. Basisstationen oder Funkzugangspunkte zwischengeschaltet werden müssen. Beabsichtigt eine Funkstation die Übertragung von Nachrichten an eine andere Funkstation außerhalb ihres Funkabdeckungsbereiches, wie es z.B. in einem Adhoc-Modus oftmals der Fall ist, so muss zuerst ein Pfad zwischen der Sende- und der Empfang-Funkstation ermittelt werden. Ein Pfad verläuft über eine oder mehrere Funkstationen, welche Nachrichten bei einer Übertragung zwischen Sende- und Empfangs-Funkstation weiterleiten. Bei den Funkstationen des Pfades handelt es sich somit um jeweils benachbarte Funkstationen, welche direkt über Funk miteinander kommunizieren können.

Das Dokument WO 01/28170 A2 beschreibt ein Adhoc-Computernetzwerk, in welchem Pakete versendet werden. Die Knoten des Netzwerks senden "scheduling packets" mit Informationen über andere Knoten, welche sich bis zu zwei Hops von dem jeweiligen Knoten entfernt befinden. Weiterhin enthalten die "scheduling packets" Informationen über belegte und freie Kanäle.

Ein Pfad kann z.B. durch verschiedenartige Verfahren zur dezentralen Pfadermittlung durch Funkstationen ermittelt werden. In der Regel erfolgt hierbei die Versendung einer Vielzahl an Signalisierungsnachrichten, so dass die knappen Funkressourcen durch die Ermittlung des Pfades erheblich beansprucht werden. Alternativ hierzu kann ein Pfad auch durch ein zentral unterstütztes Verfahren zur Pfadermittlung unter Einbeziehung einer Einrichtung, welcher Nachbarschaftsbeziehungen zwischen Funkstationen bzw. die aktuelle Netzwerktopologie bekannt ist, bestimmt werden. Nachdem die Einrichtung den Funkstationen den von ihr bestimmten Pfad bekannt gegeben hat, können die Funkstationen dann Nachrichten über den Pfad übertragen, wobei bei jeder Weiterleitung der Nachricht die jeweilige weiterleitende Funkstation einen Zugriff auf die Funkressourcen vornehmen muss. Gemäß dem Standard IEEE 802.11 erfolgt ein derartiger Zugriff z.B. über ein CSMA (Carrier Sense Mult-iple Access)-Verfahren. Nachteilig hieran ist jedoch, dass die vollständige Übertragung einer Nachricht über den Pfad aufgrund erfolgloser Zugriffe auf die Funkressourcen oder aufgrund der Tatsache, dass ein Zugriff aufgrund der Reservierung der Funkressourcen durch andere Funkstationen nicht möglich ist, verzögert werden kann, so dass der Pfad in der Zwischenzeit veraltert ist und somit keine vollständige Nachrichtenübertragung mehr über diesen erfolgen kann. Weiterhin ist es bei einem unkoordinierten Zugriff der Sende-Funkstation und der Funkstationen des Pfades auf die Funkressourcen möglich, dass eine Funkstationen so viele Nachrichten zur Weiterleitung empfängt, dass ihr Speicher überlastet ist, so dass Nachrichten verloren gehen bzw. verworfen werden müssen.

Der Erfindung liegt die Aufgabe zugrunde, ein Verfahren zur Kommunikation zwischen einer Einrichtung und Funkstationen eines Funkkommunikationssystems aufzuzeigen, welches Funkstationen eine effiziente Übertragung von Nachrichten über einen Pfad ermöglicht. Weiterhin soll eine Einrichtung zur Durchführung des Verfahrens aufgezeigt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

Das Verfahren dient zur Kommunikation per Funk zwischen einer Einrichtung und Funkstationen eines eine Mehrzahl von Funkstationen umfassenden Funkkommunikationssystems. In dem Funkkommunikationssystem werden Nachrichten von Sende- zu Empfangs-Funkstationen direkt oder über einen über eine oder mehrere die Nachrichten weiterleitende Funkstationen verlaufenden Pfad übertragen. Erfindungsgemäß versendet die Einrichtung Informationen an Funkstationen über einen oder mehrere Pfade zwischen jeweils einer Sende- und einer Empfangs-Funkstation und über für mindestens eine Nachrichtenübertragung über den oder die Pfade zu verwendende Funkressourcen.

Die Einrichtung kann hierbei Bestandteil des gleichen Funkkommunikationssystem wie die Funkstationen sein, oder auch eines anderen Funkkommunikationssystems. Zumindest ein Teil der Funkstation des Funkkommunikationssystems ist in der Lage, mit der Einrichtung über Funk zu kommunizieren, so dass diese Funkstationen die Informationen von der Einrichtung empfangen und gegebenenfalls auch Nachrichten an die Einrichtung versenden können. Bei der Einrichtung kann es sich zum Beispiel um eine Basisstation eines zellularen Funkkommunikationssystems handeln. Die Funkstationen des Funkkommunikationssystems können zum Beispiel teilnehmerseitige Funkstationen oder Funkzugangspunkten eines WLAN umfassen.

Die Informationen über den Pfad, welche die Einrichtung versendet, können zum Beispiel eine Angabe von Sende-Funkstationen, Empfangs-Funkstationen, und den Funkstationen des Pfades, über welche Nachrichten zwischen der Sende- und der Empfangs-Funkstation weitergeleitet werden, sowie gegebenenfalls eine Pfadnummer, umfassen. Die Sende- und die Empfangs-Funkstation müssen nicht anders ausgestaltet sein als andere Funkstationen des Funkkommunikationssystems, insbesondere ist es möglich, dass jede Funkstation des Funkkommunikationssystems sowohl als Sende-, als auch als Empfangs-Funkstation, als auch als Nachrichten weiterleitende Funkstation eines Pfades fungieren kann.

Versendet die Einrichtung Informationen über eine Mehrzahl von Pfaden, so ist es möglich, dass Teile von Pfaden übereinstimmen, so dass Pfade zum Beispiel eine gemeinsame Sende- und/oder eine gemeinsame Empfangs-Funkstation und/oder gemeinsame weiterleitende Funkstationen aufweisen. Die versendeten Informationen über die zu verwendenden Funkressourcen beziehen sich auf diejenigen Pfade, über welche Informationen von der Einrichtung versendet wurden. Eine Angabe von zu verwendenden Funkressourcen kann zum Beispiel eine Frequenz- und/oder Zeit- und/oder Code- und/oder Raumrichtungsangabe umfassen.

Einer Weiterbildung der Erfindung gemäß bestimmt die Einrichtung den oder die Pfade unter Verwendung von Kenntnissen von Nachbarschaftsbeziehungen zwischen Funkstationen des Funkkommunikationssystems. Insbesondere bestimmt die Einrichtung einen Pfad auf Anfrage, so zum Beispiel auf Anfrage durch die Sende-Funkstation. Die zur Pfadbestimmung verwendeten Nachbarschaftsbeziehungen wurden der Einrichtung vorteilhafterweise zuvor von Funkstationen übermittelt.

Mit Vorzug werden die Informationen über den oder die Pfade und über die Funkressourcen in einer gemeinsamen Nachricht versendet. Somit findet eine einzige Nachricht Verwendung, welche sowohl die Informationen über den oder die Pfade als auch die dazugehörigen zu verwendenden Funkressourcen beinhaltet.

Gemäß einer Ausgestaltung der Erfindung umfassen die Informationen über die Funkressourcen in Bezug auf mindestens einen Pfad eine Zuweisung von Funkressourcen an die Sende-Funkstation des Pfades und/oder an eine oder mehrere Funkstationen, über welche der Pfad verläuft. Eine Zuweisung von Funkressourcen an Funkstationen kann hierbei einzeln erfolgen, so dass bestimmten einzelnen Funkstationen Funkressourcen zugewiesen werden, oder auch summarisch, indem einer Gruppe von Funkstationen Funkressourcen zugewiesen werden. So können der Sende-Funkstation und den Funkstationen, über welche ein Pfad verläuft, insgesamt Funkressourcen zugewiesen werden.

Vorzugsweise erfolgt die Übertragung von Nachrichten zwischen den Funkstationen in Zeitschlitzen. Weiterhin umfassen die Informationen über die Funkressourcen in Bezug auf mindestens einen Pfad eine Zuweisung von jeweils mindesten einem Zeitschlitz an die Sende-Funkstation des mindestens einen Pfades und/oder an eine oder mehrere Funkstationen, über welche der mindestens eine Pfad verläuft. Das Funkkommunikationssystem weist in diesem Fall eine TDMA-Komponente (TDMA: Time Division Multiple Access) auf. Es muss sich jedoch nicht um ein reines TDMA-System handelt, zum Beispiel ist eine Mischung aus FDMA (FDMA: Frequency Division Multiple Access) und TDMA möglich. Die Zuweisung der Zeitschlitze kann wie oben beschrieben einzeln erfolgen, indem zum Beispiel einer ersten Funkstation ein erster Zeitschlitz, einer zweiten Funkstation ein zweiter Zeitschlitz usw. zugewiesen wird. Ebenso ist eine summarische Zuweisung wie oben beschrieben möglich. Bei einer summarischen Zuweisung von Zeitschlitzen an eine Gruppe von Funkstationen teilen die Funkstationen die zugewiesenen Zeitschlitze dann unter sich auf. Die Art der Aufteilung kann zum Beispiel in einer anderen durch die Einrichtung versendete Nachricht definiert sein.

In Weiterbildung der Erfindung ist in Bezug auf mindestens einen Pfad eine solche Zuweisung von Zeitschlitzen beinhaltet, dass der Sende-Funkstation des mindestens einen Pfads und allen Funkstationen, über welche der mindestens eine Pfad verläuft, Zeitschlitze zugewiesen sind. In diesem Fall ist es möglich, dass zumindest eine Nachricht bzw. ein Datenpaket von der Sende- zu der Empfangs-Funkstation des jeweiligen Pfades unter Verwendung der zugewiesenen Zeitschlitze übertragen wird.

Es ist vorteilhaft, dass jeweils eine Anzahl von aufeinanderfolgenden Zeitschlitzen zu einem Zeitrahmen zusammengefasst werden, und dass die Versendung der Informationen durch die Einrichtung vor oder zu Beginn eines Zeitrahmens erfolgt, und dass die Informationen über die Funkressourcen Zeitschlitze dieses Zeitrahmens betreffen. Eine entsprechende Versendung von Informationen durch die Einrichtung kann insbesondere vor oder zu Beginn jedes Zeitrahmens stattfinden, so dass die Informationen von der Einrichtung periodisch versendet werden. Vorteilhafterweise ändert sich der Inhalt der Informationen über den oder die Pfade und über die Funkressourcen von Zeitrahmen zu Zeitrahmen zumindest teilweise.

In Weiterbildung der Erfindung ist in Bezug auf mindestens einen Pfad eine solche Zuweisung von Zeitschlitzen beinhaltet, dass der Sende-Funkstation des mindestens einen Pfades und einer oder mehreren Funkstationen, über welche der mindestens eine Pfad verläuft, insgesamt zeitlich aufeinanderfolgende Zeitschlitze zugewiesen sind. Somit existiert ein Block von aufeinanderfolgenden Zeitschlitzen, welche ausschließlich der Nachrichtenübertragung über einen einzigen Pfad zugeordnet sind. Vorzugsweise entspricht die Anzahl der Zeitschlitze des jeweiligen Blocks der Anzahl an Hops bei einer Nachrichtenübertragung von der jeweiligen Sende- zur Empfangs-Funkstation. In diesem Fall kann unter Verwendung des Blocks von Zeitschlitzen genau ein Datenpaket der Länge eines Zeitschlitzes von der jeweiligen Sende- zur jeweiligen Empfangs-Funkstation übertragen werden.

Es ist auch möglich, dass in Bezug auf mindestens einen Pfad eine solche Zuweisung von Zeitschlitzen beinhaltet ist, dass der Sende-Funkstation des mindestens einen Pfades und einer oder mehreren Funkstationen, über welche der mindestens eine Pfad verläuft, insgesamt zeitlich beabstandete Zeitschlitze zugewiesen sind. Dies bedeutet, dass alle Zeitschlitze, welche der Übertragung von Nachrichten über einen Pfad zugeordnet sind, einen zeitlichen Abstand voneinander aufweisen somit nicht direkt aufeinanderfolgen. Die anderen Zeitschlitze zwischen den dem Pfad zugewiesenen Zeitschlitzen können dann anderen Pfaden zur Nachrichtenübertragung zugewiesen werden. Vorteilhafterweise entspricht der Abstand zwischen den einzelnen einem Pfad zugewiesenen Zeitschlitzen der Anzahl der anderen Pfade, über welche Informationen versendet und Zeitschlitze zugewiesen werden. Werden zum Beispiel drei verschiedenen Pfaden Zeitschlitze zur Nachrichtenübertragung zugewiesen, so kann der erste, der vierte, der siebte usw. Zeitschlitz dem ersten Pfad zur Kommunikation zugewiesen werden.

Mit Vorzug ist in Bezug auf mindestens einen Pfad eine solche Zuweisung von Zeitschlitzen an Funkstationen beinhaltet, dass die zeitliche Reihenfolge der zugewiesenen Zeitschlitze der Reihenfolge der Nachrichtenübertragung über den mindestens einen Pfad entspricht. In diesem Fall wird der Sende-Funkstation des Pfades der erste der dem Pfad zugeordneten Zeitschlitze zugewiesen, der ersten Funkstation, welche die Nachricht weiterleitet, der zweite der dem Pfad zugewiesenen Zeitschlitze usw. Die zugewiesenen Zeitschlitze können hierbei jeweils direkt aufeinanderfolgen oder zeitlich beabstandet sein.

In Weiterbildung der Erfindung ist in Bezug auf mindestens einen Pfad eine solche Zuweisung von Zeitschlitzen beinhaltet, dass vor dem Beginn der Versendung einer zweiten Nachricht über den mindestens einen Pfad unter Verwendung der zugewiesenen Zeitschlitze jede zuvor unter Verwendung der zugewiesenen Zeitschlitze versendete erste Nachricht an die Empfangs-Funkstation des Pfades übertragbar ist. Die Zuweisung der Zeitschlitze durch die Einrichtung erfolgt somit derart, dass die Sende-Funkstation des Pfades eine zweite Nachricht nur dann über den Pfad versenden darf, wenn eine zuvor von ihr versendete erste Nachricht die Empfangs-Funkstation des Pfades bei korrekter Weiterleitung durch die Funkstationen des Pfades erreichen konnte.

Einer vorteilhaften Ausgestaltung der Erfindung gemäß werden jeweils eine Anzahl von aufeinanderfolgenden Zeitschlitzen zu einem Zeitrahmen zusammengefasst und Funkstationen senden zu oder vor Beginn eines Zeitrahmens Informationen über mindestens jeweils eine zu versendende Nachricht an die Einrichtung. Diese von den Funkstationen gesendeten Informationen betreffen insbesondere den Umfang von zu versendenden Nachrichten, zum Beispiel in Form einer Angabe einer Anzahl von Zeit schlitzen, welche zur Versendung der Nachrichten benötigt werden. In diesem Fall wird der Einrichtung von den jeweiligen Funkstation eine Zahl größer gleich eins genannt, bei Vorliegen keiner zu versendenden Nachricht erfolgt keine Mitteilung an die Einrichtung. Bei den Funkstationen, welche Informationen über zu versendende Nachrichten an die Einrichtung senden, handelt es sich zum Beispiel um Sende-Funkstationen von Pfaden, oder auch um Nachrichten weiterleitende Funkstationen, welche eine oder mehrere Nachrichten zuvor empfangen haben und diese noch nicht weitergeleitet haben. Vorteilhafterweise umfassen die Informationen über die zu versendenden Nachrichten auch Angaben über die jeweilige Empfangs-Funkstation. Die Versendung der Informationen über zu versendende Nachrichten erfolgt zu oder vor Beginn eines Zeitrahmens, so dass die Einrichtung den jeweiligen Funkstationen Funkressourcen in diesem Zeitrahmen zuweisen kann.

Einer vorteilhaften Ausgestaltung der Erfindung gemäß ist eine solche Zuweisung von Zeitschlitzen beinhaltet, dass die Anzahl und/oder die zeitliche Lage von mindestens einem mindestens einer Funkstation zugewiesenen Zeitschlitz von dem jeweiligen Umfang der von der mindestens einen Funkstation zu versendenden mindestens einen Nachricht abhängt. In diesem Fall werden diejenigen Funkstationen, deren Speicher aktuell einen hohen Auslastungsgrad aufweist, bevorzugt bei der Zuweisung von Funkressourcen behandelt.

Es ist vorteilhaft, dass eine solche Zuweisung von Zeitschlitzen beinhaltet ist, dass die Anzahl und/oder die zeitliche Lage von mindestens einem mindestens einer Funkstation zugewiesenen Zeitschlitz davon abhängt, ob die mindestens eine Funkstation die mindestens eine zu versendende Nachricht zuvor zur Weiterleitung empfangen hat. In diesem Fall erfolgt eine Bevorzugung derjenigen Funkstation bei der Zuweisung von Funkressourcen, welche als Relaisstationen fungieren. Dieses Vorgehen unterstützt eine zügige Übertragung einer von einer Sende-Funkstation versendeten Nachricht an die jeweilige Empfangs-Funkstation.

Eine Ausgestaltung der Erfindung gemäß versendet die Einrichtung die Informationen über den oder die Pfade und über die Funkressourcen per Broadcast, d.h. per Rundsenderuf. Somit sind die von der Einrichtung versendeten Informationen nicht an einzelne Funkstationen als Empfänger der Nachrichten adressiert, so dass grundsätzlich alle Funkstationen innerhalb des Funkabdeckungsbereiches der Einrichtung die Informationen empfangen und verarbeiten können. Dies hat den Vorteil, dass eine über einen Pfad, welchen die von der Einrichtung versendeten Informationen betreffen, übertragene Nachricht keine vollständige Pfadangabe enthalten sein muss, da diejenigen Funkstationen, welche die Nachricht weiterleiten, aus den von der Einrichtung gesendeten Informationen über den Pfad den jeweiligen Nachbarn, an welchen die Nachricht weiterzuleiten ist, kennen. Hierdurch kann der Signalisierungsoverhead reduziert werden.

Die oben genannte Aufgabe hinsichtlich einer Einrichtung wird durch eine Einrichtung zur Kommunikation per Funk mit Funkstationen eines Funkkommunikationssystems mit den Merkmalen des Anspruchs 16 gelöst.

Vorteilhafte Ausgestaltungen und Weiterbildungen sind Gegenstand von Unteransprüchen.

Die erfindungsgemäße Einrichtung weist Mittel zum Speichern von Nachbarschaftsbeziehungen zwischen Funkstationen des Funkkommunikationssystem auf, sowie Mittel zum Versenden von Informationen an Funkstationen über einen oder mehrere Pfade zwischen jeweils einer Sende- und einer Empfangs-Funkstation und über für mindestens eine Nachrichtenübertragung über den oder die Pfade zu verwendende Funkressourcen. Die Versendung dieser Informationen kann insbesondere im Rahmen einer einzigen Nachricht erfolgen. Vorzugsweise beziehen sich die Informationen über die Funkressourcen auf Zeitschlitze eines Funkkommunikationssystem mit einer TDMA-Komponente.

In Weiterbildung der Erfindung weist die Einrichtung weiterhin auf: Mittel zum Bestimmen von Pfaden zwischen jeweils einer Sende- und einer Empfangs-Funkstation, und Mittel zum Zuweisen von Funkressourcen an die Sende-Funkstation des jeweiligen Pfades und/oder an eine oder mehrere Funkstationen, über welche der jeweilige Pfad verläuft. Insbesondere sind Zuweisungen von Zeitschlitzen gemäß den oben beschriebenen Verfahren mit der erfindungsgemäßen Einrichtung möglich.

Eine Ausgestaltung der Erfindung gemäß weist die Einrichtung weiterhin Mittel auf zum Empfangen von Informationen über von Funkstationen zu versendende Nachrichten von den jeweiligen Funkstationen. Die Einrichtung kann diese Nachrichten auswerten und bei einer Zuweisung von Funkressourcen berücksichtigen. Vorteilhaft ist auch das Vorhandensein von Mitteln zum Empfangen von Informationen über Nahbarschaftsbeziehungen zwischen Funkstationen des Funkkommunikationssystems und von Mitteln zum Empfangen von Nachrichten mit einer Anfrage zur Bestimmung von mindestens einem Pfad zwischen Funkstationen des Funkkommunikationssystems.

Es ist möglich, dass die erfindungsgemäße Einrichtung aus einer Mehrzahl von miteinander verbundenen Einzeleinrichtungen besteht, so dass die aufgeführten Mittel der erfindungsgemäßen Einrichtung nicht in einer einzigen Einrichtung, sondern in einer Mehrzahl von Einrichtungen lokalisiert sind. Die erfindungsgemäße Einrichtung eignet sich insbesondere zur Durchführung des oben beschriebenen erfindungsgemäßen Verfahrens, wobei dies auch auf die Unteransprüche zutrifft. Hierzu kann sie weitere geeignete Mittel aufweisen.

Im folgenden wird die Erfindung anhand eines Ausführungsbeispiels näher erläutert. Dabei zeigen
- Figur 1:: einen Ausschnitt aus zwei Funkkommunikationssystemen,
- Figur 2:: zwei Pfade zwischen Funkstationen eines Funkkommunikationssystems,
- Figur 3:: den Aufbau einer erfindungsgemäßen Basisstation,
- Figur 4:: den Aufbau einer von der Basisstation an Mobilstationen gesendeten Nachricht,
- Figur 5a:: eine erste Zuweisung von Zeitschlitzen eines Zeitrahmens an Mobilstationen,
- Figur 5b:: eine zweite Zuweisung von Zeitschlitzen eines Zeitrahmens an Mobilstationen,
- Figur 5c:: eine dritte Zuweisung von Zeitschlitzen eines Zeitrahmens an Mobilstationen.

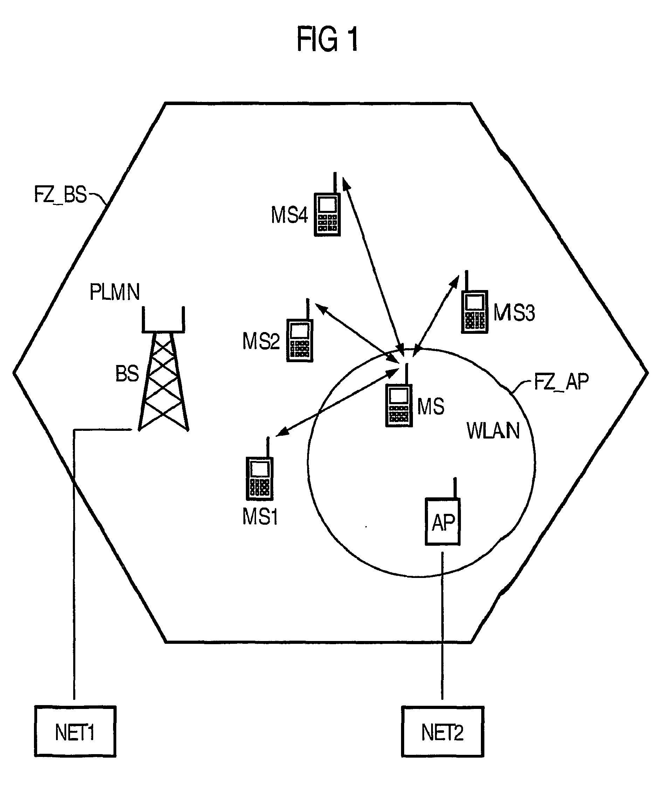

In Figur 1 ist eine Funkzelle FZ_BS einer Basisstation BS eines zellularen Funkkommunikationssystems PLMN dargestellt. Hierbei ist die Basisstation BS mit weiteren netzseitigen Einrichtungen NET1 des Funkkommunikationssystems PLMN verbunden. Weitere Funkzellen des flächendeckenden Funkkommunikationssystems PLMN sind der Übersichtlichkeit halber nicht dargestellt.

Innerhalb der Funkzelle FZ_BS der Basisstation BS befinden sich die Mobilstationen MS, MS1, MS2, MS3 und MS4 eines lokalen Funkkommunikationssystems WLAN. Die Mobilstation MS befindet sich auch innerhalb des Funkabdeckungsbereiches FZ_AP eines Funkzugangspunktes AP des lokalen Funkkommunikationssystems WLAN. Der Funkzugangspunkt AP ist mit weiteren netzseitigen Einrichtungen NET2 des lokalen Funkkommunikationssystems WLAN verbunden, über welche die Verbindung des lokalen Funkkommunikationssystems WLAN mit anderen Daten- und Kommunikationsnetzen, wie z.B. mit dem Funkkommunikationssystem PLMN möglich ist. Gegebenenfalls vorhandene weitere Funkzugangspunkte des lokalen Funkkommunikationssystems WLAN sind der Übersichtlichkeit halber in Figur 1 nicht dargestellt.

Die Mobilstationen MS, MS1, MS2, MS3 und MS4 des lokalen Funkkommunikationssystems WLAN sind jeweils mit einer Funkschnittstelle zur Kommunikation mit der Basisstation BS des zellularen Funkkommunikationssystems PLMN und mit einer Funkschnittstelle zur Kommunikation untereinander und mit dem Funkzugangspunkt AP innerhalb des lokalen Funkkommunikationssystems WLAN ausgestattet.

Da sich die Mobilstation MS innerhalb des Funkabdeckungsbereiches FZ_AP des Funkzugangspunktes AP befindet, ist eine direkte Kommunikation zwischen dem Funkzugangspunkt AP und der Mobilstation MS möglich. Die Mobilstationen MS1, MS2, MS3 und MS4 jedoch können nicht direkt mit dem Funkzugangspunkt AP kommunizieren, so dass die Mobilstation MS als Relaisstation bei einer Kommunikation zwischen den Mobilstationen MS1, MS2, MS3 und MS4 und dem Funkzugangspunkt AP fungiert, in Figur 1 durch Doppelpfeile zwischen den Mobilstationen MS1, MS2, MS3 und MS4 und der Mobilstation MS symbolisiert.

Der Zugriff auf das Funkmedium innerhalb des lokalen Funkkommunikationssystems WLAN erfolgt gemäß einem TDMA-Verfahren. Die Kommunikation findet somit innerhalb von Zeitschlitzen statt, wobei eine Anzahl von jeweils fünf aufeinanderfolgenden Zeitschlitzen zu einem Zeitrahmen zusammengefasst wird. Pro Zeitschlitz erfolgt die Versendung eines Datenpaketes.

Eine Übertragung von Nachrichten zwischen den Mobilstationen des lokalen Funkkommunikationssystems WLAN erfolgt in einem Adhoc-Modus nicht über den Funkzugangspunkt AP. Vielmehr kommunizieren die Mobilstationen des lokalen Funkkommunikationssystems WLAN direkt miteinander. Für eine Versendung von Nachrichten an eine nicht benachbarte Mobilstation muss jedoch vor der Übertragung der Nachricht ein Pfad zwischen Sender und Empfänger ermittelt werden. Für die Bestimmung eines Pfades zwischen Sender und Empfänger ist hierbei die Basisstation BS zuständig.

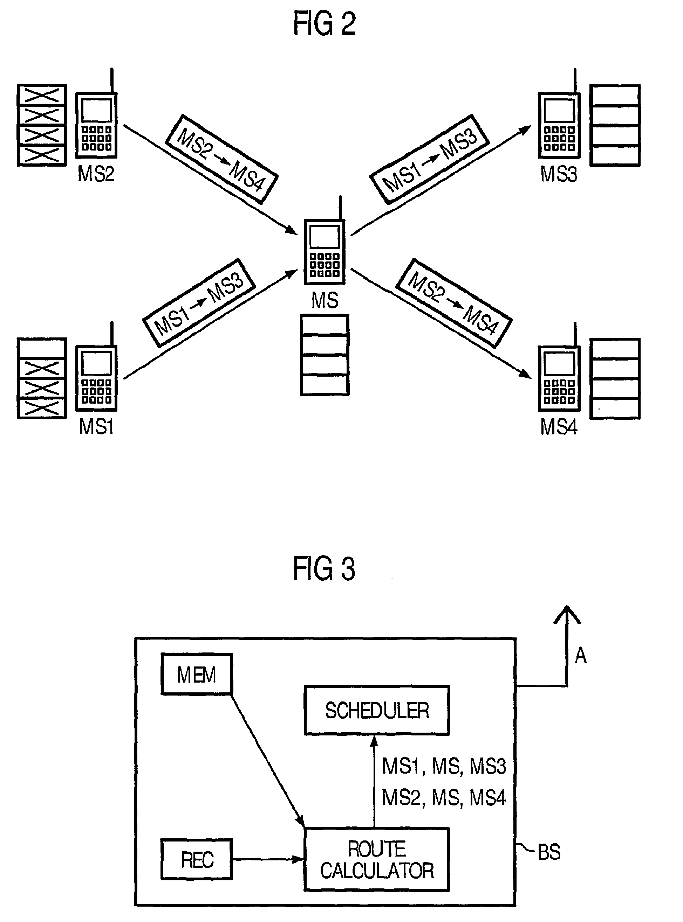

In Figur 2 ist der Fall dargestellt, dass die Mobilstation MS1 die Versendung einer Nachricht MS1•MS3 an die Mobilstation MS3 beabsichtigt. Jede der Mobilstationen MS, MS1, MS2, MS3 und MS4 weist einen Speicher auf, welcher vier Datenpakete fassen kann, in Figur 2 durch die in vier Streifen unterteilten Rechtecke bei den Mobilstationen MS, MS1, MS2, MS3 und MS4 gekennzeichnet. Die Nachricht MS1•MS3 besteht aus drei Datenpaketen, durch die Belegung von drei Streifen des Speichers der Mobilstation MS1 gekennzeichnet. Die Mobilstation MS2 beabsichtigt die Versendung einer Nachricht MS2•MS4 an die Mobilstation 4, welche aus 4 Datenpaketen besteht. Die Übertragung der Nachrichten MS1•MS3 und MS2•MS4 erfolgt jeweils über einen Pfad, wobei beide Pfade über die Mobilstation MS verlaufen. Die Ermittlung der beiden Pfade wird im folgenden beschrieben.

Bevor die Nachrichten MS1•MS3 und MS2•MS4 übertragen werden können, stellen die Sender, d.h. die Mobilstationen MS1 und MS2, jeweils eine Anfrage zur Bestimmung eines Pfades an die Basisstation BS. In dieser Anfrage ist die Anzahl der zu versendenden Datenpakete und Identifikationsinformation des jeweiligen Empfängers, d.h. der Mobilstationen MS3 und MS4, enthalten.

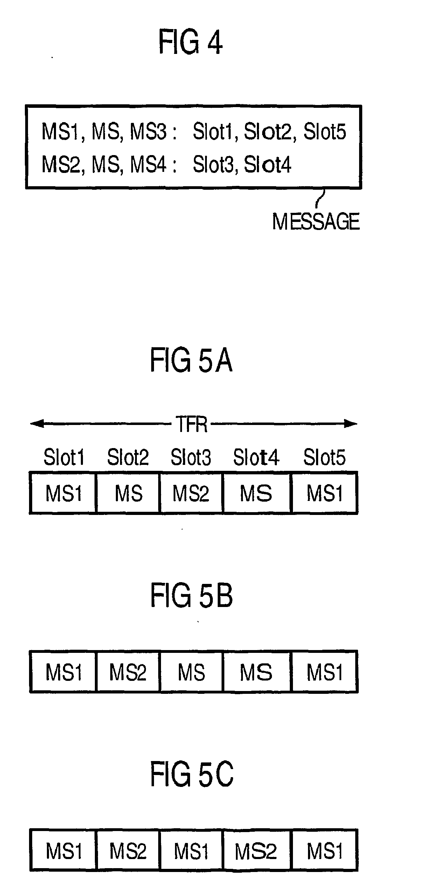

Figur 3 zeigt den Aufbau der Basisstation BS. Mit der Empfangsvorrichtung REC empfängt die Basisstation BS die Anfragen zur Pfadbestimmung von den Mobilstationen MS1 und MS2. In dem Speicher MEM ist die Topologie des Netzwerkes der Mobilstationen MS, MS1, MS2, MS3 und MS4 des lokalen Funkkommunikationssystems WLAN abgelegt. Die Nachbarschaftsbeziehungen werden von den Mobilstationen MS, MS1, MS2, MS3 und MS4 regelmäßig ermittelt und an die Basisstation BS versendet. In der Einrichtung ROUTE CALCULATOR werden die Anfragen der Mobilstationen MS1 und MS2 ausgewertet und Pfade zu den jeweiligen Empfängern bestimmt, wobei hierbei die gespeicherten Nachbarschaftsbeziehungen verwendet werden. Zur Übertragung von Nachrichten zwischen der Mobilstation MS1 und der Mobilstation MS3 wird der Pfad MS1,MS,MS3 und für die Übertragung von Nachrichten zwischen der Mobilstation MS2 und der Mobilstation MS4 der Pfad MS2,MS,MS4 ermittelt. Die beiden ermittelten Pfade MS1,MS,MS3 und MS2,MS,MS4 werden an die Einrichtung SCHEDULER übergeben, welche für die Mediumzugangskontrolle und somit für die Zuweisung von Funkressourcen zuständig ist. Die Einrichtung SCHEDULER weist den beiden Pfaden Funkressourcen des folgenden Zeitrahmens zu, über die Antenne A wird dann die in Figur 4 dargestellte Nachricht MESSAGE per Broadcast an die Mobilstationen MS, MS1, MS2, MS3 und MS4 des lokalen Funkkommunikationssystems WLAN gesendet.

Die Nachricht MESSAGE der Figur 4 enthält die Nennung der beiden Pfade, wobei für jeden Pfad der Sender, alle Relaisstationen und der Empfänger angegeben ist. Weiterhin sind dem Pfad MS1,MS,MS3 die drei Zeitschlitze Slot1, Slot2 und Slot5 und dem Pfad MS2,MS,MS4 die beiden Zeitschlitze Slot3 und Slot4 des folgenden Zeitrahmens zugewiesen.

Die Figuren 5a bis 5c zeigen die fünf Zeitschlitze Slot1, Slot2, Slot3, Slot4 und Slot5 des auf die Versendung der Nachricht MESSAGE folgenden Zeitrahmens TFR. In Figur 5a stehen die ersten beiden Zeitschlitze Slot1 und Slot2 gemäß der Nachricht MESSAGE für die Nachrichtenübertragung über den Pfad MS1,MS,MS3 zur Verfügung. Dementsprechend verwendet die Mobilstation MS1 den ersten Zeitschlitz Slot1 zur Versendung eines ersten Datenpaketes und die Mobilstation MS leitet dieses Datenpaket in dem zweiten Zeitschlitz Slot2 an die Mobilstation MS3 weiter. Die folgenden beiden Zeitschlitze Slot3 und Slot4 stehen für die Nachrichtenübertragung über den Pfad MS2,MS,MS4 zur Verfügung. Daher verwendet die Mobilstation MS2 den dritten Zeitschlitz Slot3 zur Versendung eines Datenpaketes und die Mobilstation MS leitet dieses Datenpaket in dem vierten Zeitschlitz Slot4 an die Mobilstation MS4 weiter. Der fünfte Zeitschlitz Slot5 wurde wieder der Nachrichtenübertragung über den Pfad MS1,MS,MS3 zugewiesen, die Mobilstation IKS1 nutzt daher den Zeitschlitz Slot5 zur Versendung eines zweiten Datenpaketes an die Mobilstation MS.

Die Mobilstationen MS, MS1, MS2, MS3 und MS4 setzen die den Pfaden zugewiesenen Zeitschlitze derart ein, dass ein Datenpaket vollständig über einen Pfad übertragen wird, bevor das nächste Datenpaket von dem Sender über den gleichen Pfad versendet wird. Diese Art der Verwendung der den Pfaden zugewiesenen Funkressourcen kann den Mobilstationen MS, MS1, MS2, MS3 und MS4 entweder in der Nachricht MESSAGE mitgeteilt werden, oder in einer zuvor versendeten Mitteilung, welche Gültigkeit für zukünftige Zeitrahmen hat.

In der Nachricht MESSAGE werden die Zeitschlitze den Pfaden derart zugeordnet, dass für jeden Pfad eine Anzahl an aufeinanderfolgenden Zeitschlitzen zur Verfügung stehen, die der Anzahl an Hops des jeweiligen Pfades entspricht. So stehen für die Nachrichtenübertragung über den Pfad MS1,MS,MS3 die beiden aufeinanderfolgenden Zeitschlitze Slot1 und Slot2 zur Verfügung, innerhalb welcher ein Datenpaket vollständig von dem Sender MS1 zu dem Empfänger MS3 übertragen werden kann. Ebenso stehen für die Nachrichtenübertragung über den Pfad MS2,MS,MS4 die beiden aufeinanderfolgenden Zeitschlitze Slot3 und Slot4 zur Verfügung, innerhalb welcher ein Datenpaket von der Mobilstation MS2 zur Mobilstation MS4 übertragen werden kann. Somit wurde in Bezug auf alle Pfade, welchen im Zeitrahmen TFR Funkressourcen zugewiesen wurden, sowohl dem Sender als auch jeder Mobilstation, über die der jeweilige Pfad verläuft, Funkressourcen zugewiesen. Da der Zeitrahmen TFR fünf Zeitschlitze aufweist, während für jeweils eine vollständige Nachrichtenübertragung über die Pfade MS1,MS,MS3 und MS2,MS,MS4 insgesamt nur vier Zeitschlitze benötigt werden, wird der übrige fünfte Zeitschlitz Slot5 einem der Pfade MS1,MS,MS3 und MS2,MS,MS4 zugewiesen, welchen Funkressourcen im Zeitrahmen TFR zugewiesen sind. Die Nachricht MESSAGE weist den fünften Zeitschlitz Slot5 dem Pfad MS1,MS,MS3 zu, jedoch kann innerhalb des übrigen Zeitschlitzes Slot5 keine vollständige Nachrichtenübertragung von der Mobilstation MS1 an die Mobilstation MS3 erfolgen.

Einer anderen in Figur 5b dargestellten Vorgehensweise gemäß werden die Zeitschlitze den Pfaden alternierend zugewiesen, so dass die Zeitschlitze Slot1, Slot3 und Slot5 z.B. dem Pfad MS1,MS,MS3 und die Zeitschlitze Slot2 und Slot4 dem Pfad MS2,MS,MS4 zur Verfügung gestellt werden. In diesem Fall verwendet die Mobilstation MS1 den ersten Zeitschlitz Slot1 zur Versendung eines ersten Datenpaketes. Im folgenden Zeitschlitz Slot2 versendet die Mobilstation MS2 ein Datenpaket. Das von der Mobilstation MS1 empfangene Datenpaket leitet die Mobilstation MS im dritten Zeitschlitz Slot3 an die Mobilstation MS3 weiter, während sie das von der Mobilstation MS2 empfangene Datenpaket im vierten Zeitschlitz Slot4 an die Mobilstation MS4 weiterleitet. Der fünfte Zeitschlitz Slot5 wird von der Mobilstation MS1 zur Versendung eines zweiten Datenpaketes verwendet. Die alternierende Zuweisung von Funkressourcen zu Pfaden erhöht die Fairness zwischen Nachrichtenübertragungen auf verschiedenen Pfaden. Bei der in Figur 5a dargestellten Verteilung hingegen tritt der Fall ein, dass Nachrichtenübertragungen über lange Pfade bevorzugt behandelt werden, indem ihnen ein größeres Volumen an Funkressourcen zur Verfügung gestellt wird.

Die Zuordnung von Zeitschlitzen zu Mobilstationen eines Pfades erfolgt in den Figuren 5a und 5b so, dass die zeitliche Reihenfolge der zugeordneten Zeitschlitze der Reihenfolge der Versendung bzw. Weiterleitung eines Datenpaketes über den jeweiligen Pfad entspricht. Dies bedeutet z.B. in Bezug auf den Pfad MS1,MS,MS3, dass zuerst ein Zeitschlitz von der Mobilstation MS1 und dann ein Zeitschlitz von der Mobilstation MS verwendet wird. Danach kann ein weiterer Zeitschlitz der Mobilstation MS1 zugewiesen sein, gefolgt von einem weiteren Zeitschlitz für die Mobilstation MS.

In Figur 5c ist der Fall dargestellt, dass von dieser Vorgehensweise abgewichen wird. Die negativen Auswirkungen werden anhand der Figur 2 geschildert. Analog zu Figur 5b wurden die Zeitschlitze alternierend den beiden Pfaden zugewiesen. Den ersten Zeitschlitz Slot1 verwendet die Mobilstation MS1 zur Versendung des ersten Datenpaketes der Nachricht MS1•MS3, den zweiten Zeitschlitz Slot2 verwendet die Mobilstation MS2 zur Versendung des ersten Datenpaketes der Nachricht MS2•MS4. Im folgenden dritten Zeitschlitz Slot4 versendet die Mobilstation MS1 das zweite Datenpaket der Nachricht MS1•MS3, während die Mobilstation MS2 im vierten Zeitschlitz Slot4 das zweite Datenpaket der Nachricht MS2•MS4 versendet. Im letzten Zeitschlitz Slot5 versendet die Mobilstation MS1 das dritte Datenpaket der Nachricht MS1•MS3. Zum Ende des Zeitrahmens TFR beinhaltet somit der Speicher der Mobilstation MS1 kein Datenpaket, der Speicher der Mobilstation MS2 ein Datenpaket und der Speicher der Mobilstation MS vier Datenpakete. Das fünfte von der Mobilstation MS im fünften Zeitschlitz Slot5 empfangene Datenpaket musste verworfen werden, da kein Speicherplatz in der Mobilstation MS vorhanden war. Um derartige Speicherüberlastungen zu vermeiden, sollten die Zeitschlitz in Bezug auf einen Pfad den Mobilstationen so zugewiesen werden, dass eine Mobilstation, welche einen Zeitschlitz genutzt hat, erst dann wieder einen Zeitschlitz nutzen darf, nachdem die anderen Mobilstationen des Pfades einen Zeitschlitz genutzt haben.

Gemäß den Figuren 5a und 5b wurde bis zum Ende des Zeitrahmens TFR jeweils ein Datenpaket vollständig über die beiden Pfade MS1,MS,MS3 und MS2,MS,MS4 übertragen. Ein drittes an die Mobilstation MS3 adressiertes Datenpaket wurde von der Mobilstation MS1 an die Mobilstation MS gesendet. In Bezug auf den nächsten Zeitrahmen meldet die Mobilstation MS1 an die Basisstation BS, dass sie ein Datenpaket an die Mobilstation MS3 zu versenden hat, die Mobilstation MS2 meldet den Bedarf, zwei Datenpakete an die Mobilstation MS4 zu versenden und die Mobilstation MS den Bedarf, ein Datenpaket an die Mobilstation MS3 zu versenden. Wie oben beschrieben ermittelt die Basisstation BS die jeweiligen Pfade zwischen den Mobilstationen MS1 und MS3, MS2 und MS4, sowie MS und MS3. Bei der Pfadermittlung können Kenntnisse über bereits zuvor ermittelte Pfade einfließen. In einer Nachricht, deren Aufbau der Nachricht MESSAGE entspricht, werden den Mobilstationen MS, MS1, MS2, MS3 und MS4 die Pfade und die zugewiesenen Zeitschlitze mitgeteilt. Hierbei wird die Mobilstation MS, welche das Datenpaket von der Mobilstation MS1 an die Mobilstation MS3 weiterzuleiten hat, so behandelt, als ob sie der ursprüngliche Sender des Datenpaketes wäre.

Jedoch ist es möglich, dass bei der Vergabe der Funkressourcen in der Einrichtung SCHEDULER Mobilstationen, welche Datenpakete weiterzuleiten haben, priorisiert behandelt werden. In diesem Fall sendet die Mobilstation MS nach Ende des Zeitrahmens TFR nicht nur die Mitteilung an die Basisstation BS, dass sie ein Datenpaket an die Mobilstation MS3 zu versenden hat, sondern auch, dass diese Versendung einer Weiterleitung entspricht, sie dieses Datenpaket also zuvor von einer anderen Mobilstation empfangen hat, ohne der adressierte Empfänger des Datenpaketes zu sein. In diesem Fall kann der Mobilstation MS der erste Zeitschlitz des nächsten Zeitrahmens zugewiesen werden, gefolgt von einer Zuweisung der restlichen Zeitschlitze nach einem Verfahren wie zu Figur 5a oder 5b beschrieben.

Eine weitere Möglichkeit, Mobilstationen bei der Zuweisung von Funkressourcen bevorzugt zu behandeln, besteht darin, den Speicherzustand der Mobilstationen zu berücksichtigen. Demgemäss werden Zeitschlitze in großem Umfang und/oder zu Beginn eines Zeitrahmens denjenigen Pfaden zugewiesen, bei welchen der Sender viele Datenpakete zu versenden hat.

Melden viele Mobilstationen den Bedarf, Datenpakete zu versenden, so ist es möglich, dass nicht allen Pfaden Funkressourcen des nächsten Zeitrahmens zugewiesen werden können. Die Nachricht MESSAGE enthält nur Informationen über diejenigen Pfade, welchen auch Funkressourcen im folgenden Zeitrahmen zugewiesen werden. Dementsprechend muss die Einrichtung ROUTE CALCULATOR nur dann einen Pfad ermitteln, wenn dem Pfad im nächsten Zeitrahmen Funkressourcen zugewiesen werden. Hierzu findet ein geeigneter Informationsaustauschs zwischen den Einrichtungen ROUTE CALCULATOR und SCHEDULER der Basisstation BS statt. Dies hat den Vorteil, dass die Pfade direkt vor ihrer Verwendung zur Nachrichtenübertragung bestimmt werden, so dass aktuelle Informationen über die Netzwerktopologie einfließen können. Es ist jedoch auch möglich, dass die Einrichtung ROUTE CALCULATOR in Bezug auf jede Anfrage einer Mobilstation den jeweiligen Pfad ermittelt, welcher jedoch nur dann in der Nachrichte MESSAGE enthalten ist, wenn dem Pfad auch Funkressourcen zugewiesen werden.

## Patentansprüche

1. Verfahren zur Kommunikation per Funk zwischen einer Einrichtung (BS) und Funkstationen (MS, MS1, MS2, MS3, MS4) eines eine Mehrzahl von Funkstationen (AP, MS, MS1, MS2, MS3, MS4) umfassenden Funkkommunikationssystems (WLAN), wobei in dem Funkkommunikationssystem (WLAN) Nachrichten (MS1→MS3, MS2→MS4) von Sende-Funkstation (MS1, MS2) zu Empfangs-Funkstation (MS3, MS4) direkt oder über einen über eine oder mehrere die Nachrichten (MS1→MS3, MS2→MS4) weiterleitende Funkstationen (MS) verlaufenden Pfad (MS1,MS,MS3, MS2,MS,MS4) übertragen werden,
**dadurch gekennzeichnet,**
**dass** die Einrichtung (BS) Informationen über einen oder mehrere über eine oder mehrere Nachrichten (MS1→MS3, MS2→MS4) weiterleitende Funkstationen (MS) verlaufende Pfade (MS1,MS,MS3, MS2,MS,MS4) zwischen jeweils einer Sende-Funkstation.(MS1, MS2) und einer Empfangs-Funkstation (MS3, MS4) und über für mindestens eine Nachrichtenübertragung über den oder die Pfade (MS1,MS,MS3, MS2,MS,MS4) zu verwendende Funkressourcen (Slot1, Slot2, Slot3, Slot4, Slot5) an Funkstationen (MS, MS1, MS2, MS3, MS4) versendet.

2. Verfahren nach Anspruch 1, **dadurch gekennzeichnet,**
**dass** die Einrichtung (BS) den oder die Pfade (MS1,MS,MS3, MS2,MS,MS4) unter Verwendung von Kenntnissen von Nachbarschaftsbeziehungen zwischen Funkstationen (MS, MS1, MS2, MS3, MS4) des Funkkommunikationssystems (WLAN) bestimmt.

3. Verfahren nach Anspruch 1 oder 2, **dadurch gekennzeichnet,**
**dass** die Informationen über den oder die Pfade (MS1,MS,MS3, MS2,MS,MS4) und über die Funkressourcen (Slot1, Slot2, Slot3, Slot4, Slot5) in einer gemeinsamen Nachricht (MESSAGE) versendet werden.

4. Verfahren nach einem der Ansprüche 1 bis 3, **dadurch gekennzeichnet,**
**dass** die Informationen über die Funkressourcen (Slot1, Slot2, Slot3, Slot4, Slot5) in Bezug auf mindestens einen Pfad (MS1,MS,MS3, MS2,MS,MS4) eine Zuweisung von Funkressourcen (Slot1, Slot2, Slot3, Slot4, Slot5) an die Sende-Funkstation (MS1, MS2) des Pfades (MS1,MS,MS3, MS2,MS,MS4) und/oder an eine oder mehrere Funkstationen (MS), über welche der Pfad (MS1,MS,MS3, MS2,MS,MS4) verläuft, umfassen.

5. Verfahren nach einem der Ansprüche 1 bis 4, **dadurch gekennzeichnet,**
**dass** die Übertragung von Nachrichten (MS1→MS3, MS2→MS4) zwischen den Funkstationen (AP, MS, MS1, MS2, MS3, MS4) in Zeitschlitzen (Slot1, Slot2, Slot3, Slot4, Slot5) erfolgt und
**dass** die Informationen über die Funkressourcen (Slot1, Slot2, Slot3, Slot4, Slot5) in Bezug auf mindestens einen Pfad (MS1,MS,MS3, MS2,MS,MS4) eine Zuweisung von jeweils mindestens einem Zeitschlitz (Slot1, Slot2, Slot3, Slot4, Slot5) an die Sende-Funkstation (MS1, MS2) des mindestens einen Pfades (MS1,MS,MS3, MS2,MS,MS4) und/oder an eine oder mehrere Funkstationen(MS), über welche der mindestens eine Pfad (MS1,MS,MS3, MS2,MS,MS4) verläuft, umfassen.

6. Verfahren nach Anspruch 5, **dadurch gekennzeichnet,**
**dass** in Bezug auf mindestens einen Pfad (MS1,MS,MS3, MS2,MS,MS4) eine solche Zuweisung von Zeitschlitzen (Slot1, Slot2, Slot3, Slot4, Slot5) beinhaltet ist, dass der Sende-Funkstation (MS1, MS2) des mindestens einen Pfades (MS1,MS,MS3, MS2,MS,MS4) und allen Funkstationen (MS), über welche der mindestens eine Pfad (MS1,MS,MS3, MS2,MS,MS4) verläuft, Zeitschlitze (Slot1, Slot2, Slot3, Slot4, SlotS) zugewiesen sind.

7. Verfahren nach Anspruch 5 oder 6, **dadurch gekennzeichnet,**
**dass** jeweils eine Anzahl von aufeinanderfolgenden Zeitschlitzen (Slot1, Slot2, Slot3, Slot4, Slot5) zu einem Zeitrahmen (TFR) zusammengefasst werden und
**dass** die Versendung der Informationen durch die Einrichtung (BS) vor oder zu Beginn eines Zeitrahmens (TFR) erfolgt und
**dass** die Informationen über die Funkressourcen Zeitschlitze (Slot1, Slot2, Slot3, Slot4, Slot5) dieses Zeitrahmens (TFR) betreffen.

8. Verfahren nach einem der Ansprüche 5 bis 7, **dadurch gekennzeichnet,**
**dass** in Bezug auf mindestens einen Pfad (MS1,MS,MS3, MS2,MS,MS4) eine solche Zuweisung von Zeitschlitzen (Slot1, Slot2, Slot3, Slot4, Slot5) beinhaltet ist, dass der Sende-Funkstation (MS1, MS2) des mindestens einen Pfades (MS1,MS,MS3, MS2,MS,MS4) und einer oder mehreren Funkstationen (MS), über welche der mindestens eine Pfad (MS1,MS,MS3, MS2,MS,MS4) verläuft, insgesamt zeitlich aufeinanderfolgende Zeitschlitze zugewiesen sind.

9. Verfahren nach einem der Ansprüche 5 bis 8, **dadurch gekennzeichnet,**
**dass** in Bezug auf mindestens einen Pfad (MS1,MS,MS3, MS2,MS,MS4) eine solche Zuweisung von Zeitschlitzen (Slot1, Slot2, Slot3, Slot4, Slot5) beinhaltet ist, dass der Sende-Funkstation (MS1, MS2) des mindestens einen Pfades (MS1,MS,MS3, MS2,MS,MS4) und einer oder mehreren Funkstationen (MS), über welche der mindestens eine Pfad (MS1,MS,MS3, MS2,MS,MS4) verläuft, insgesamt zeitlich beabstandete Zeitschlitze zugewiesen sind.

10. Verfahren nach einem der Ansprüche 5 bis 9, **dadurch gekennzeichnet,**
**dass** in Bezug auf mindestens einen Pfad (MS1,MS,MS3, MS2,MS,MS4) eine solche Zuweisung von Zeitschlitzen (Slot1, Slot2, Slot3, Slot4, Slot5) an Funkstationen (MS, MS1, MS2, MS3, MS4) beinhaltet ist, dass die zeitliche Reihenfolge der zugewiesenen Zeitschlitze der Reihenfolge der Nachrichtenübertragung über den mindestens einen Pfad (MS1,MS,MS3, MS2,MS,MS4) entspricht.

11. Verfahren nach einem der Ansprüche 5 bis 10, **dadurch gekennzeichnet,**
**dass** in Bezug auf mindestens einen Pfad (MS1,MS,MS3, MS2,MS,MS4) eine solche Zuweisung von Zeitschlitzen (Slot1, Slot2, Slot3, Slot4, Slot5) beinhaltet ist, dass vor dem Beginn der Versendung einer zweiten Nachricht über den mindestens einen Pfad (MS1,MS,MS3, MS2,MS,MS4) unter Verwendung der zugewiesenen Zeitschlitze jede zuvor unter Verwendung der zugewiesenen Zeitschlitze versendete erste Nachricht an die Empfangs-Funkstation (MS3, MS4) des Pfades (MS1,MS,MS3, MS2,MS,MS4) übertragbar ist.

12. Verfahren nach einem der Ansprüche 5 bis 11, **dadurch gekennzeichnet,**
**dass** jeweils eine Anzahl von aufeinanderfolgenden Zeitschlitzen (Slot1, Slot2, Slot3, Slot4, Slot5) zu einem Zeitrahmen (TFR) zusammengefasst werden und
**dass** Funkstationen (MS, MS1, MS2, MS3, MS4) zu oder vor Beginn eines Zeitrahmens (TFR) Informationen über jeweils mindestens eine zu versendende Nachricht (MS1→MS3, MS2→MS4) an die Einrichtung (BS) senden.

13. Verfahren nach Anspruch 12, **dadurch gekennzeichnet,**
**dass** eine solche Zuweisung von Zeitschlitzen (Slot1, Slot2, Slot3, Slot4, Slot5) beinhaltet ist, dass die Anzahl und/oder die zeitliche Lage von mindestens einem mindestens einer Funkstation (MS, MS1, MS2, MS3, MS4) zugewiesenen Zeitschlitz von dem jeweiligen Umfang der von der mindestens einen Funkstation (MS, MS1, MS2, MS3, MS4) zu versendenden mindestens einen Nachricht (MS1→MS3, MS2→MS4) abhängt.

14. Verfahren nach Anspruch 12 oder 13 , **dadurch gekennzeichnet,**
**dass** eine solche Zuweisung von Zeitschlitzen (Slot1, Slot2, Slot3, Slot4, Slot5) beinhaltet ist, dass die Anzahl und/oder die zeitliche Lage von mindestens einem mindestens einer Funkstation (MS, MS1, MS2, MS3, MS4) zugewiesenen Zeitschlitz davon abhängt, ob die mindestens eine Funkstation (MS, MS1, MS2, MS3, MS4) die mindestens eine zu versendende Nachricht zuvor zur Weiterleitung empfangen hat.

15. Verfahren nach einem der Ansprüche 1 bis 14 , **dadurch gekennzeichnet,**
**dass** die Einrichtung (BS) die Informationen über den oder die Pfade (MS1,MS,MS3, MS2,MS,MS4) und über die Funkressourcen (Slot1, Slot2, Slot3, Slot4, Slot5) per Broadcast versendet.

16. Einrichtung (BS) zur Kommunikation per Funk mit Funkstationen (MS, MS1, MS2, MS3, MS4) eines Funkkommunikationssystems (WLAN), mit
Mitteln (MEM) zum Speichern von Nachbarschaftsbeziehungen zwischen Funkstationen (MS, MS1, MS2, MS3, MS4) des Funkkommunikationssystems (WLAN),
Mitteln zum Versenden von Informationen über einen oder mehrere jeweils über eine oder mehrere Nachrichten weiterleitende Funkstationen (MS) verlaufende Pfade (MS1,MS,MS3, MS2,MS,MS4) zwischen jeweils einer Sende-Funkstation (MS1, MS2) und einer Empfangs-Funkstation (MS3, MS4) und über für mindestens eine Nachrichtenübertragung über den oder die Pfade (MS1,MS,MS3, MS2,MS,MS4) zu verwendende Funkressourcen (Slot1, Slot2, Slot3, Slot4, Slot5) an Funkstationen (MS, MS1, MS2, MS3, MS4).

17. Einrichtung (BS) nach Anspruch 16 mit
Mitteln (ROUTE CALCULATOR) zum Bestimmen von Pfaden (MS1,MS,MS3, MS2,MS,MS4) zwischen jeweils einer Sende-Funkstation (MS1, MS2) und einer Empfangs-Funkstation (MS3, MS4) und
Mitteln (SCHEDULER) zum Zuweisen von Funkressourcen (Slot1, Slot2, Slot3, Slot4, Slot5) an die Sende-Funkstation (MS1, MS2) des jeweiligen Pfades (MS1,MS,MS3, MS2,MS,MS4) und/oder an eine oder mehrere Funkstationen (MS), über welche der jeweilige Pfad (MS1,MS,MS3, MS2,MS,MS4) verläuft.

18. Einrichtung (BS) nach Anspruch 16 oder 17 mit
Mitteln (REC) zum Empfangen von Informationen über von Funkstationen (MS, MS1, MS2, MS3, MS4) zu versendende Nachrichten (MS1→MS3, MS2→MS4) von den jeweiligen Funkstationen (MS, MS1, MS2, MS3, MS4).

## Claims

1. Method for communicating by radio between a device (BS) and radio stations (MS, MS1, MS2, MS3, MS4) of a radio communications system (WLAN) comprising a plurality of radio stations (AP, MS, MS1, MS2, MS3, MS4), with messages (MS1→MS3, MS2→MS4) being transmitted in the radio communications system (WLAN) from the transmitting radio station (MS1, MS2) to the receiving radio station (MS3, MS4) directly or through a routing (MS1,MS,MS3, MS2,MS,MS4) passing through one more radio stations (MS) forwarding the messages (MS1→MS3, MS2→MS4),
**characterized in that**
the device (BS) sends information about one or more routings (MS1,MS,MS3, MS2,MS,MS4) passing through radio stations (MS) forwarding one or more messages (MS1→MS3, MS2→MS4) between a transmitting radio station (MS1, MS2) a receiving radio station (MS3, MS4) and about the radio resources (Slot1, Slot2, Slot3, Slot4, Slot5) to be used for at least one radio transmission over the routing or the routings (MS1,MS,MS3, MS2,MS,MS4) to radio stations (MS, MS1, MS2, MS3, MS4).

2. Method according to claim 1, **characterized in that**,
the device (BS) determines the routing or the routings (MS1,MS,MS3, MS2,MS,MS4) using knowledge of adjacent relationships between radio stations (MS, MS1, MS2, MS3, MS4) of the radio communications system (WLAN).

3. Method according to claim 1 or 2, **characterized in that**,
the information about the routing or routings (MS1,MS,MS3, MS2,MS,MS4) and about the radio resources (Slot1, Slot2,Slot3, Slot4, Slot5) is sent in a common message (MESSAGE).

4. Method according to one of the claims 1 to 3,
**characterized in that**
the information about the radio resources (Slot1, Slot2, Slot3, Slot4, Slot5,) in relation to at least one routing (MS1,MS,MS3, MS2,MS,MS4) comprises an allocation of radio resources (Slot1 Slot2, Slot3, Slot4, Slot5) to the transmitting radio station (MS1, MS2) of the routing (MS1,MS,MS3, MS2,MS,MS4) and/or to one or more radio stations (MS) through which the routing (MS1,MS,MS3, MS2,MS,MS4) passes.

5. Method according to one of the claims 1 to 4,
**characterized in that**
the messages (MS1→MS3, MS2→MS4) are transmitted between the radio stations (AP, MS, MS1, MS2, MS3, MS4) in time slots (Slot1 Slot2, Slot3, Slot4, Slot5) and that the information about the radio communication resources (Slot1, Slot2, Slot3, Slot4, Slot5) in relation to at least one path (MS1,MS,MS3, MS2,MS,MS4) comprises an allocation of at least one time slot (Slot1 Slot2, Slot3, Slot4, Slot5) to the transmitting radio station (MS1, MS2) of the at least one routing in each case (MS1,MS,MS3, MS2,MS,MS4) and/or to one or more radio stations (MS) through which the at least one path (MS1,MS,MS3, MS2,MS,MS4) passes.

6. Method according to claim 5, **characterized in that**, in relation to the at least one routing (MS1,MS,MS3, MS2,MS,MS4) such an allocation of time slots (Slot1 Slot2, Slot3, Slot4, Slot5) is included so that the transmitting radio station (MS1, MS2) of the at least one routing (MS1,MS,MS3, MS2,MS,MS4) and all radio stations (MS) through which the at least one routing (MS1,MS,MS3, MS2,MS,MS4) passes, are assigned time slots (Slot1, Slot2, Slot3, Slot4, Slot5).

7. Method according to claim 5 or 6, **characterized in that**,
a number of consecutive time slots (Slot1 Slot2, Slot3, Slot4, Slot5) are grouped together into a time frame (TFR) in each case and
the information is sent by the device (BS) before or at the beginning or a time frame (TFR) and
the information about the radio communication resources relates to time slots (Slot1 Slot2, Slot3, Slot4, Slot5) of this time frame (TFR).

8. Method according to one of the claims 5 to 7,
**characterized in that**
in relation to the at least one routing (MS1,MS,MS3. MS2,MS,MS4) such an allocation of time slots (Slot1 Slot2, Slot3, Slot4, Slot5) is included so that the transmitting radio station (MS1. MS2) of the at least one routing (MS1,MS,MS3, MS2,MS,MS4) and one or more radio stations (MS), through which the at least one routing (MS1,MS,MS3. MS2,MS,MS4) passes are assigned chronologically consecutive time slots overall.

9. Method according to one of the claims 5 to 8,
**characterized in that**
in relation to the at least one routing (MS1,MS,MS3. MS2,MS,MS4) such an allocation of time slots (Slot1, Slot2, Slot3, Slot4, Slot5) is included so that the transmitting radio station (MS1. MS2) of the at least one routing (MS1,MS,MS3, MS2,MS,MS4) and one or more radio stations (MS), through which the at least one routing (MS1,MS,MS3, MS2,MS,MS4) passes, are assigned chronologically spaced time slots overall.

10. Method according to one of the claims 5 to 9,
**characterized in that**
in relation to at least one routing (MS1,MS,MS3, MS2,MS,MS4) such an allocation of time slots (Slot1, Slot2, Slot3, Slot4, Slot5) to radio stations (MS, MS3, MS4, MS1, MS2) is included so that the chronological order of the allocated time slots corresponds to the order of message transmission over the at least one routing (MS2,MS,MS4, MS4,MS,MS4).

11. Method according to one of the claims 5 to 10,
**characterized in that**
in relation to at least one routing (MS1,MS,MS3, MS2,MS,MS4) such an allocation of time slots (Slot1, Slot2, Slot3, Slot4, Slot5) is included so that before the beginning of the transmission of a second message over the at least one routing (MS2,MS,MS4, MS1,MS,MS3) using the allocated time slots, each first message previously sent using the allocated time slots can be transmitted to the receiving radio station (MS3, MS4) of the routing (MS1,MS,MS1, MS1,MS,MS3)

12. Method according to one of the claims 5 to 11,
**characterized in that**
a number of consecutive time slots (Slot1, Slot2, Slot3, Slot4, Slot5) are grouped together into a time frame (TFR) in each case and
radio stations (MS, MS1, MS2, MS3, MS4) send information to the device (BS) at the beginning or before the beginning of a time frame (TFR) about at least one message to be sent (MS1→MS3, MS2→MS4).

13. Method according to claim 12, **characterized in that**,
such an assignment of time slots (Slot1 Slot2, Slot3, Slot4, Slot5) is included so that the number and/or the chronological position of at least one time slot assigned to at least one radio station (MS, MS3, MS4, MS1. MS2) depends on the relevant scope of the at least one message (MS3→MS1, MS4→MS2) to be sent by the at least one radio station (MS, MS1. MS1, MS1, MS3).

14. Method according to claim 12 or 13, **characterized in that**,
such an assignment of time slots (Slot1, Slot2, Slot3, Slot4, Slot5) is included so that the number and/or the chronological position of at least one time slot assigned to at least one radio station (MS, MS3, MS4, MS1. MS2) depends on the whether the at least one radio station (MS, MS1, MS1, MS1, MS3) has received a message for forwarding.

15. Method according to one of the claims 1 to 14,
**characterized in that**
the device (BS) sends the information about the routing or the routings (MS1,MS,MS3, MS2,MS,MS4) and about the radio resources (Slot1, Slot2, Slot3, Slot4, Slot5) by broadcasting it.

16. Device (BS) for communication by radio with radio stations (MS, MS1, MS2, MS3, MS4) of a radio communications system (WLAN), with means (MEM) for storing adjacent relationships between radio stations (MS, MS1. MS2, MS3, MS4) of the radio communications system (WLAN),
Means for sending information about one or more routings (MS1,MS,MS3, MS2,MS,MS4) running through one or more radio stations (MS) forwarding one or more messages between a transmitting radio station (MS1, MS2) and a receiving radio station (MS3, MS4) and about radio resources (Slot1, Slot2, Slot3, Slot4, Slot5) for at least one message transmission over the routing or routings (MS1,MS,MS3, MS2,MS,MS4) to radio stations (MS, MS1, MS2, MS3, MS4).

17. Device (BS) according to claim 16 with
means (ROUTE CALCULATOR) for determining routings (MS1,MS,MS3, MS2,MS,MS4) between a transmitting radio station (MS1, MS2) and a receiving radio station (MS3, MS4) in each case and
means (SCHEDULER) for allocating radio resources (Slot1, Slot2, Slot3, Slot4, Slot5) to the transmitting radio station (MS1, MS2) of the relevant routing (MS1,MS,MS3, MS2,MS,MS4) and/or to one or more radio stations (MS) through which the relevant routing (MS1,MS,MS3, MS2,MS,MS4) passes.

18. Device (BS) according to claim 16 or 17 with
means (REC) for receiving information about messages (MS→MS3, MS2→MS4) to be sent by radio stations (MS, MS1, MS2, MS3, MS4) from the relevant radio stations (MS, MS1, MS2, MS3, MS4).

## Revendications

1. Procédé pour la communication par radio entre un dispositif (BS) et des stations radio (MS, MS1, MS2, MS3, MS4) d'un système de communication radio (WLAN) comprenant une pluralité de stations radio (AP, MS, MS1, MS2, MS3, MS4), dans ledit système de communication radio (WLAN), des messages (MS1→MS3, MS2→MS4) d'une station radio émettrice (MS1, MS2) vers une station radio réceptrice (MS3, MS4) étant transmis directement ou via un chemin (MS1,MS,MS3, MS2,MS,MS4) passant par une ou plusieurs stations radio (MS) transférant les messages (MS→MS3, MS2→MS4),
**caractérisé en ce que**
le dispositif (BS) envoie des informations sur un ou plusieurs chemins (MS1,MS,MS3, MS2,MS,MS4) passant par une ou plusieurs stations radio (MS) transférant des messages (MS1→MS3, MS2→MS4) entre à chaque fois une station radio émettrice (MS1, MS2) et une station radio réceptrice (MS3, MS4) et sur des ressources radio (Slot1, Slot2, Slot3, Slot4, Slot5) à utiliser pour au moins une transmission de message via le ou les chemins (MS1,MS,MS3, MS2,MS,MS4), à des stations radio (MS, MS1, MS2, MS3, MS4).

2. Procédé selon la revendication 1, **caractérisé en ce que**
le dispositif (BS) détermine le ou les chemins (MS1,MS,MS3, MS2,MS,MS4) à l'aide de connaissances de relations de voisinage entre stations radio (MS, MS1, MS2, MS3, MS4) du système de communication radio (WLAN).

3. Procédé selon la revendication 1 ou 2, **caractérisé en ce que**
les informations sur le ou les chemins (MS1,MS,MS3, MS2,MS,MS4) et sur les ressources radio (Slot1, Slot2, Slot3, Slot4, Slot5) sont envoyées dans un message commun (MESSAGE).

4. Procédé selon l'une des revendications 1 à 3, **caractérisé en ce que**
les informations sur les ressources radio (Slot1, Slot2, Slot3, Slot4, Slot5) par rapport à au moins un chemin (MS1,MS,MS3, MS2,MS,MS4) comportent une attribution de ressources radio (Slot1, Slot2, Slot3, Slot4, Slot5) à la station radio émettrice (MS1, MS2) dudit chemin (MS1,MS,MS3, MS2,MS,MS4) et/ou à une ou plusieurs stations radio (MS) par lesquelles passe ledit chemin (MS1,MS,MS3, MS2,MS,MS4).

5. Procédé selon l'une des revendications 1 à 4, **caractérisé en ce que**
la transmission de messages (MS1→MS3, MS2→MS4) entre les stations radio (AP, MS, MS1, MS2, MS3, MS4) a lieu dans des créneaux temporels (Slot1, Slot2, Slot3, Slot4, Slot5), et
**en ce que** les informations sur les ressources radio (Slot1, Slot2, Slot3, Slot4, Slot5) par rapport à au moins un chemin (MS1,MS,MS3, MS2,MS,MS4) comportent une attribution d'au moins un créneau temporel (Slot1, Slot2, Slot3, Slot4, Slot5) à la station radio émettrice (MS1, MS) dudit au moins un chemin (MS1,MS,MS3, MS2,MS,MS4) et/ou à une ou plusieurs stations radio (MS) par lesquelles passe ledit au moins un chemin (MS1,MS,MS3, MS2,MS,MS4).

6. Procédé selon la revendication 5, **caractérisé en ce que**
par rapport à au moins un chemin (MS1, MS, MS3, MS2,MS,MS4), une telle attribution de créneaux temporels (Slot1, Slot2, Slot3, Slot4, Slot5) signifie que des créneaux temporels (Slot1, Slot2, Slot3, Slot4, Slot5) sont attribués à la station radio émettrice (MS1, MS2) dudit au moins un chemin (MS1,MS,MS3, MS2,MS,MS4) et à toutes les stations radio (MS) par lesquelles passe ledit au moins un chemin (MS1,MS,MS3, MS2,MS,MS4).

7. Procédé selon la revendication 5 ou 6, **caractérisé en ce que**
à chaque fois un nombre de créneaux temporels (Slot1, Slot2, Slot3, Slot4, Slot5) se succédant sont rassemblés en une trame (TFR), et
**en ce que** l'envoi des informations par le dispositif (BS) a lieu avant ou au début d'une trame (TFR), et
**en ce que** les informations sur les ressources radio concernent des créneaux temporels (Slot1, Slot2, Slot3, Slot4, Slot5) de cette trame (TFR).

8. Procédé selon l'une des revendications 5 à 7, **caractérisé en ce que**
par rapport à au moins un chemin (MS1,MS,MS3, MS2,MS,MS4), une telle attribution de créneaux temporels (Slot1, Slot2, Slot3, Slot4, Slot5) signifie que des créneaux temporels se succédant chronologiquement dans l'ensemble sont attribués à la station radio émettrice (MS1, MS2) dudit au moins un chemin (MS1,MS,MS3, MS2,MS,MS4) et à une ou plusieurs stations radio (MS) par lesquelles passe ledit au moins un chemin (MS1,MS,MS3, MS2,MS,MS4).

9. Procédé selon l'une des revendications 5 à 8, **caractérisé en ce que**
par rapport à au moins un chemin (MS1,MS,MS3, MS2,MS,MS4), une telle attribution de créneaux temporels (Slot1, Slot2, Slot3, Slot4, Slot5) signifie que des créneaux temporels espacés chronologiquement dans l'ensemble sont attribués à la station radio émettrice (MS1, MS2) dudit au moins un chemin (MS1,MS,MS3, MS2,MS,MS4) et à une ou plusieurs stations radio (MS) par lesquelles passe ledit au moins un chemin (MS1,MS,MS3, MS2,MS,MS4).

10. Procédé selon l'une des revendications 5 à 9, **caractérisé en ce que**
par rapport à au moins un chemin (MS1,MS,MS3, MS2,MS,MS4), une telle attribution de créneaux temporels (Slot1, Slot2, Slot3, Slot4, Slot5) à des stations radio (MS, MS1, MS2, MS3, MS4) signifie que l'ordre chronologique des créneaux temporels attribués correspond à l'ordre de la transmission de message via ledit au moins un chemin (MS1,MS,MS3, MS2,MS,MS4).

11. Procédé selon l'une des revendications 5 à 10, **caractérisé en ce que**
par rapport à au moins un chemin (MS1,MS,MS3, MS2,MS,MS4), une telle attribution de créneaux temporels (Slot1, Slot2, Slot3, Slot4, Slot5) signifie qu'avant le début de l'envoi d'un deuxième message via ledit au moins un chemin (MS1,MS,MS3, MS2,MS,MS4) à l'aide des créneaux temporels attribués, chaque premier message envoyé auparavant à l'aide des créneaux temporels attribués peut être transmis à la station radio réceptrice (MS3, MS4) dudit chemin (MS1,MS,MS3, MS2,MS,MS4).

12. Procédé selon l'une des revendications 5 à 11, **caractérisé en ce que**
à chaque fois un nombre de créneaux temporels (Slot1, Slot2, Slot3, Slot4, Slot5) se succédant sont rassemblés en une trame (TFR), et
**en ce que** des stations radio (MS, MS1, MS2, MS3, MS4), avant ou au début d'une trame (TFR), envoient des informations sur à chaque fois au moins un message (MS1→MS3, MS2→MS4) à envoyer, au dispositif (BS).

13. Procédé selon la revendication 12, **caractérisé en ce que**
une telle attribution de créneaux temporels (Slot1, Slot2, Slot3, Slot4, Slot5) signifie que le nombre et/ou la position chronologique d'au moins un créneau temporel attribué à au moins une station radio (MS, MS1, MS2, MS3, MS4) dépend de la taille respective dudit au moins un message (MS1→MS3, MS2→MS4) à envoyer par ladite au moins une station radio (MS, MS1, MS2, MS3, MS4).

14. Procédé selon la revendication 12 ou 13, **caractérisé en ce que**
une telle attribution de créneaux temporels (Slot1, Slot2, Slot3, Slot4, Slot5) signifie que le nombre et/ou la position chronologique d'au moins un créneau temporel attribué à au moins une station radio (MS, MS1, MS2, MS3, MS4) dépend de la question de savoir si ladite au moins une station radio (MS, MS1, MS2, MS3, MS4) a auparavant reçu ledit au moins un message à envoyer, en vue du transfert.

15. Procédé selon l'une des revendications 1 à 14, **caractérisé en ce que**
le dispositif (BS) envoie les informations sur le ou les chemins (MS1,MS,MS3, MS2,MS,MS4) et sur les ressources radio (Slot1, Slot2, Slot3, Slot4, Slot5) par diffusion.

16. Dispositif (BS) pour la communication par radio avec des stations radio (MS, MS1, MS2, MS3, MS4) d'un système de communication radio (WLAN), comprenant
des moyens (MEM) pour mémoriser des relations de voisinage entre stations radio (MS, MS1, MS2, MS3, MS4) du système de communication radio (WLAN),
des moyens pour envoyer des informations sur un ou plusieurs chemins (MS1,MS,MS3, MS2,MS,MS4) passant chacun par une ou plusieurs stations radio (MS) transférant des messages entre à chaque fois une station radio émettrice (MS1, MS2) et une station radio réceptrice (MS3, MS4) et sur des ressources radio (Slot1, Slot2, Slot3, Slot4, Slot5) à utiliser pour au moins une transmission de message via le ou les chemins (MS1,MS,MS3, MS2,MS,MS4), à des stations radio (MS, MS1, MS2, MS3, MS4).

17. Dispositif (BS) selon la revendication 16, comprenant
des moyens (ROUTE CALCULATOR) pour déterminer des chemins (MS1,MS,MS3, MS2,MS,MS4) entre à chaque fois une station radio émettrice (MS1, MS2) et une station radio réceptrice (MS3, MS4), et
des moyens (SCHEDULER) pour attribuer des ressources radio (Slot1, Slot2, Slot3, Slot4, Slot5) à la station radio émettrice (MS1, MS2) du chemin respectif (MS1,MS,MS3, MS2,MS,MS4) et/ou à une ou plusieurs stations radio (MS) par lesquelles passe le chemin respectif (MS1,MS,MS3, MS2,MS,MS4).

18. Dispositif (BS) selon la revendication 16 ou 17, comprenant
des moyens (REC) pour recevoir des informations sur des messages (MS1→MS3, MS2→MS4) à envoyer par des stations radio (MS, MS1, MS2, MS3, MS4) par les stations radio respectives (MS, MS1, MS2, MS3, MS4).
